# EUROPÄISCHE PATENTSCHRIFT

(11) **EP 2 364 788 B1**
(45) Veröffentlichungstag und Bekanntmachung des Hinweises auf die Patenterteilung: **20.08.2014**
(21) Anmeldenummer: 11155781.5
(22) Anmeldetag: 24.02.2011
(51) Int. Cl.: B21C 37/12, F16L 11/16

(54) **Flexibles, gewickeltes Rohr sowie Verfahren zur Herstellung eines derartigen Rohres**
Flexible wound tube and method for producing same
Tuyau flexible enroulé ainsi que procédé de fabrication d'un tel tuyau

(30) Priorität: 12.03.2010 DE 102010011153
(43) Veröffentlichungstag der Anmeldung: 14.09.2011
(73) Patentinhaber: Novelis Deutschland GmbH, 37075 Göttingen (DE)
(72) Erfinder: Müller, Christian, 57462 Olpe (DE); Mertens, Burkhard, 58802 Balve (DE)
(74) Vertreter: Dey, Michael

(56) Entgegenhaltungen:
- DE-A1- 2 754 483
- DE-C1- 2 760 262
- US-A- 4 141 385

## Beschreibung

### Technisches Gebiet

Die Erfindung betrifft ein flexibles, gewickeltes Rohr sowie ein Verfahren zur Herstellung eines derartigen Rohres.

Flexible, aus bandförmigem Metallmaterial gewickelte Rohre sind für vielfältige Einsatzgebiete, beispielsweise als Abgasrohre von Stand- und Zuheizgeräten in Kraftfahrzeugen, bekannt. Flexible Rohre, die zumindest abschnittsweise eingesetzt werden, erleichtern den Einbau und können in vorteilhafter Weise Toleranzen zwischen dem jeweiligen Gerät und der Montageumgebung an dem Fahrzeug ausgleichen. Nachdem im Nachrüstgeschäft die Einbausituation häufig nicht bekannt ist, werden hier weitgehend ausschließlich flexible Abgasrohre eingesetzt. In den oben beschriebenen Anwendungsfällen führt die Erfindung, wie nachfolgend beschrieben, zu Vorteilen. Hierbei sind derartige Rohre nämlich aufgrund des durch sie hindurchgeleiteten Mediums, nämlich beispielsweise Abgas, besonderen Temperaturbelastungen ausgesetzt. Weitere Belastungen ergeben sich häufig aus der speziellen Einbausituation, bei der sich der Kontakt mit beispielsweise salzhaltigem Spritzwasser nicht vermeiden lässt, so dass umfangreich Korrosion auftreten kann.

### Stand der Technik

Die US 5,222,288 A betrifft ein flexibles, aus einem bandförmigen Material gewickeltes Rohr, das mehrlagig ist und bei dem die Lagen durch Ausbildung einer Falznaht miteinander verriegelt werden. Ähnliche, dort als druckknopf- oder schwalbenschwanzartige Verhakung bezeichnete Gestaltungen ergeben sich aus der gattungsgemäßen DE 27 60 262 C1, der DE 27 54 483 A1 und der US 4, 141, 385 A.

### Darstellung der Erfindung

Der Erfindung liegt die Aufgabe zugrunde, ein flexibles Rohr sowie ein Verfahren zur Herstellung desselben zu schaffen, bei dem die Verbindung zwischen einzelnen gewickelten Lagen gewährleistet ist und das gleichzeitig im Hinblick auf seine Korrosionseigenschaften verbessert ist.

Die Lösung dieser Aufgabe erfolgt zum einen durch das im Anspruch 1 beschriebene Rohr.

Demzufolge ist dieses aus zumindest einem wendelförmig gewickelten, überlappten und in einem Schnitt, der die Rohrachse enthält, betrachtet, weitgehend wellenförmig geformten, bandförmigen Material ausgeführt. Das bandförmige Material besteht aus dem Werkstoff 1.4521, und das Rohr kann zum einen zwei- oder mehrlagig gewickelt sein. Es ist jedoch ebenso denkbar, dass es lediglich an denjenigen Stellen, an denen eine Verbindung zwischen zwei Lagen ausgebildet werden soll, mehrlagig ist und im Übrigen lediglich durch eine Materiallage gebildet wird. In vorteilhafter Weise erstreckt sich das gewickelte Bandmaterial in dem genannten Schnitt, der die Rohrachse enthält, fortlaufend axial. Mit anderen Worten ist es nicht, bezüglich einer axialen Richtung, in der es sich fortlaufend erstreckt, "zurückgebogen". Insbesondere weist das erfindungsgemäße Rohr keine Falznähte auf, bei denen das Material mit einem Biegeradius von nahezu Null, d.h. einem Biegewinkel von bis zu 180°, gewissermaßen auf sich selbst gefaltet ist, um einen Falz zu bilden, wie dieser beispielsweise bei dem oben genannten Stand der Technik vorgesehen ist. Um die "Fortsetzung" des Materials in axialer Richtung sicherzustellen, muss das Material an dem Falz ein weiteres Mal in der beschriebenen Weise gebogen oder umgelegt werden. Derartige Biegungen an einer Falznaht sind jedoch, wie der Erfindung zugrundeliegende, umfangreiche Analysen ergeben haben, äußerst ungünstig.

Durch die umfangreiche Verformung herrschen nämlich in dem Werkstoff des Rohres umfangreiche Eigenspannungen, die Spannungsrisse erzeugen können. Unter diesen Umständen können die auf das Rohr einwirkenden Einflüsse, wie oben beschrieben, nämlich hohe Temperaturen, Feuchtigkeit und/oder Salz zu umfangreicher Korrosion führen. Dies wird in vorteilhafter Weise vermieden, indem eine umfangreiche Verformung des Materials, insbesondere die beschriebenen "Richtungswechsel" bei Betrachtung in axialer Richtung vermieden werden. Vielmehr erstreckt sich das Bandmaterial des erfindungsgemäßen Rohres in dem betrachteten Schnitt fortlaufend axial und wird demnach vergleichsweise wenig umfangreich verformt. Die erforderliche Bindung zwischen einzelnen Lagen und/oder an den Überlappungen wird erfindungsgemäß dadurch gewährleistet, dass an zumindest einem wendelförmig verlaufenden Wellenberg Vertiefungen und/oder eine Riffelung, die insbesondere quer zur Wickelrichtung vorgesehen ist, ausgebildet werden. An diskreten Stellen wird der Wellenberg somit im Wesentlichen in radialer Richtung eingedrückt. Bei Versuchen konnte festgestellt werden, dass auch durch diese das Material vergleichsweise wenig belastende Maßnahme, die somit die Korrosionsanfälligkeit umfangreich herabsetzt, die erforderliche Bindung zwischen den einzelnen Lagen gewährleistet werden kann. Zwischen den Lagen wird bei vergleichsweise geringem Fertigungsaufwand im Wesentlichen ein Hinterschnitt ausgebildet, dessen Eingriff nur mit vergleichsweise großem Kraftaufwand gelöst werden kann, so dass die Lagen im Einsatz in vorteilhafter Weise miteinander verriegelt sind.

Die Verringerung der Eigenspannungen in dem Rohr führt ferner in vorteilhafter Weise dazu, dass sich die Biegbarkeit des Rohres, d.h. der minimal mögliche Biegeradius verbessert. Insbesondere kann der minimale Biegeradius auf 70 % der bislang möglichen Werte verringert werden.

Bevorzugte Weiterbildungen des erfindungsgemäßen Rohres sind in den weiteren Ansprüchen beschrieben.

Bei umfangreichen Versuchen im Hinblick auf die Korrosionsbeständigkeit und Festigkeit des erfindungsgemäßen Rohres unter den oben beschriebenen Einsatzbedingungen haben sich die folgenden Maßnahmen als besonders wirksam erwiesen. Für die Vertiefungen und/oder Riffelung auf dem zumindest einen wendelförmig verlaufenden Wellenberg werden Abstände von 10° bis 20°, insbesondere etwa 15° bevorzugt.

Für die Beständigkeit insbesondere im Hinblick auf die Verriegelung der Bandmaterial-Lagen miteinander haben sich Vertiefungen mit einer Tiefe von bis zu 1,3 mm und/oder ca. 6 % des äußeren Rohrdurchmessers als günstig herausgestellt.

Bei den Experimenten wurde ferner ermittelt, dass die Korrosionsbeständigkeit besonders gut ist, wenn das Rohr mit einer anorganischen Dünnfilmbeschichtung versehen ist.

In gleicher Weise konnten gute Eigenschaften bei einer vorzugsweise galvanisch abgeschiedenen Nickelplattierung festgestellt werden.

Die Lösung der oben genannten Aufgabe erfolgt ferner durch das in Anspruch 6 beschriebene Verfahren, dessen Verfahrensschritte und bevorzugte Ausführungsformen den vorangehend beschriebenen Ausführungsformen des dadurch erzeugten Rohres entsprechen.

### Kurze Beschreibung der Zeichnungen

Nachfolgend wird ein Ausführungsbeispiel der Erfindung unter Bezugnahme auf die Zeichnungen näher erläutert. Es zeigen:
- Fig. 1: eine Draufsicht auf das erfindungsgemäße Rohr; und
- Fig. 2: eine Schnittdarstellung eines Wellenberges des erfindungsgemäßen Rohres mit einer darin ausgebildeten Vertiefung.

### Ausführliche Beschreibung einer bevorzugten Ausführungsform der Erfindung

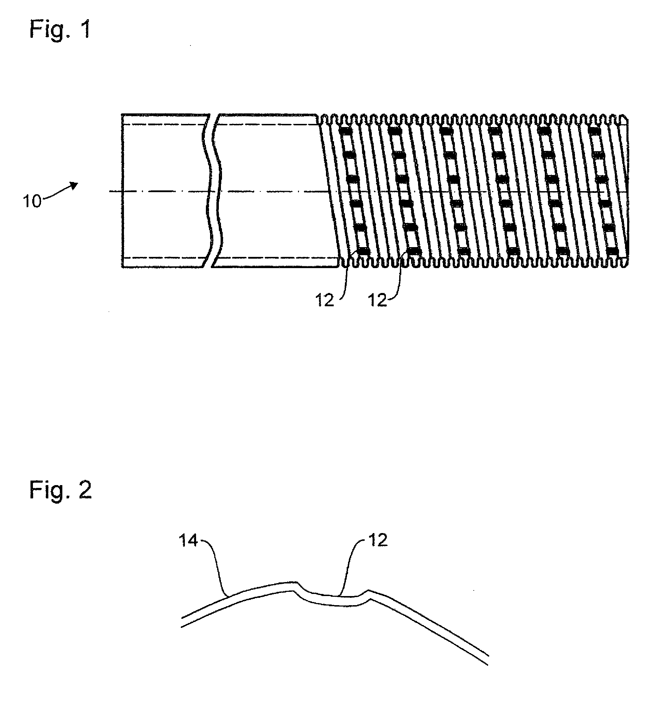

Wie in Fig. 1 zu erkennen ist, ist das aus bandförmigem Material wendelförmig und überlappend gewickelte Rohr 10 mit wellenförmigen Wänden versehen. Diese Wellenform ist insbesondere in einem Schnitt zu erkennen, der die Rohrachse enthält. Ferner erstreckt sich das dementsprechend gerillte Bandmaterial fortlaufend in axialer Richtung, und es sind keine umfangreichen "Zurück"- oder "Auf-sich*selbst"-Biegungen ausgebildet. Hierdurch werden die Eigenspannungen in dem Bandmaterial in vorteilhafter Weise gering gehalten. Die Festigkeit der überlappten Lagen von Bandmaterial wird gewährleistet durch an diskreten Stellen an zumindest einem wendelförmig verlaufenden Wellenberg ausgebildete Vertiefungen 12, die in der oben beschriebenen Weise gestaltet sein können. Insbesondere sind sie bei der gezeigten Ausführungsform in der gezeigten Draufsicht oval gestaltet.

In Fig. 2 ist ergänzend eine derartige Vertiefung 12 in einem Schnitt gezeigt, der gegenüber einem Querschnitt (senkrecht zur Rohrachse) um den Wickelwinkel verdreht ist, so dass das Bandmaterial 14 entlang eines Wellenberges dargestellt ist. Wie beschrieben, wird an zumindest einem Wellenberg die Verriegelung der einzelnen Lagen miteinander durch die an diskreten Stellen ausgebildeten Vertiefungen erreicht, die, wie gezeigt, in beiden (oder mehr) Lagen ausgebildet werden. Ergänzend oder alternativ zu zahlreichen derartigen Vertiefungen kann an zumindest einem Wellenberg eine Rändelung, mit anderen Worten zahlreiche schmale Vertiefungen ausgebildet werden. Es sei ergänzend erwähnt, dass eine derartige Rändelung und/oder die beschriebenen Vertiefungen nicht notwendigerweise an einem (durchgehenden) Wellenberg, mit anderen Worten an der wendelförmig verlaufenden Erhebung zwischen zwei Rillen ausgebildet sein muss. Wenngleich eine derartige Ausbildung fertigungstechnische Vorteile bietet, können die Vertiefungen auch über zwei oder mehr Wellenberge verteilt sein und können an dem jeweils betrachteten Wellenberg Unterbrechungen aufweisen.

## Patentansprüche

1. Flexibles Rohr (10) aus zumindest einem wendelförmig gewickelten, überlappten und in einem Schnitt, der die Rohrachse enthält, betrachtet weitgehend wellenförmig geformten bandförmigen Material, wobei sich das Bandmaterial in dem genannten Schnitt fortlaufend axial erstreckt und an diskreten Stellen an zumindest einem wendelförmig verlaufenden Wellenberg Vertiefungen (12) und/oder eine Riffelung aufweist,
**dadurch gekennzeichnet, dass** zumindest ein Band aus dem Werkstoff 1.4521 besteht.

2. Flexibles Rohr nach Anspruch 1,
**dadurch gekennzeichnet, dass** die Vertiefungen (12) und/oder die Riffelung mit Abständen von 10° bis 20°, insbesondere etwa 15° ausgebildet sind.

3. Flexibles Rohr nach Anspruch 1 oder 2,
**dadurch gekennzeichnet, dass** die Vertiefungen (12) und/oder Riffelung eine Tiefe von bis zu 1,3 mm und/oder ca. 6 % des äußeren Rohrdurchmessers aufweisen.

4. Flexibles Rohr nach einem der vorangehenden Ansprüche, **dadurch gekennzeichnet, dass** dieses eine anorganische Dünnfilmbeschichtung aufweist.

5. Flexibles Rohr nach einem der vorangehenden Ansprüche, **dadurch gekennzeichnet, dass** dieses eine Nickelplattierung, die vorzugsweise galvanisch abgeschieden ist, aufweist.

6. Verfahren zur Herstellung eines Wickelrohres, bei dem zumindest ein bandförmiges Material überlappt und in Wellenform gebracht wird, und bei dem ferner zumindest ein sich wendelförmig erstreckender Wellenberg mit Vertiefungen (12) und/oder einer Riffelung versehen wird,
**dadurch gekennzeichnet, dass** zumindest ein Band aus dem Werkstoff 1.4521 besteht.

7. Verfahren nach Anspruch 6,
**dadurch gekennzeichnet, dass** die Vertiefungen (12) und/oder Riffelung in Abständen von 10° bis 20°, insbesondere etwa 15° ausgebildet werden.

8. Verfahren nach Anspruch 6 oder 7,
**dadurch gekennzeichnet, dass** die Vertiefungen (12) und/oder Riffelung mit einer Tiefe von bis zu 1,3 mm und/oder etwa 6 % des äußeren Rohrdurchmessers ausgebildet werden.

9. Verfahren nach einem der Ansprüche 6 bis 8,
**dadurch gekennzeichnet, dass** das Rohr (10) anorganisch dünnfilmbeschichtet wird.

10. Verfahren nach einem der Ansprüche 6 bis 9,
**dadurch gekennzeichnet, dass** das Rohr (10) mit einer Nickelplattierung, vorzugsweise durch galvanisches Abscheiden versehen wird.

## Claims

1. Flexible pipe (10) made of at least one helically wound, overlapping strip-like material, which is, when viewed in a cross section containing the pipe axis, primarily formed into waves, the strip-like material continually extending axially in said section and having, at separate locations on at least one helically extending wave crest, recesses (12) and/or fluting, **characterised in that** at least one strip consists of the material 1.4521.

2. Flexible pipe according to claim 1,
**characterised in that** the recesses (12) and/or the fluting are formed so as to be spaced apart by 10° to 20°, in particular by approximately 15°.

3. Flexible pipe according to either claim 1 or claim 2,
**characterised in that** the recesses (12) and/or the fluting have a depth of up to 1.3 mm and/or of approximately 6 % of the outer diameter of the pipe.

4. Flexible pipe according to any of the preceding claims, **characterised in that** said pipe comprises an inorganic thin film coating.

5. Flexible pipe according to any of the preceding claims, **characterised in that** said pipe comprises nickel plating, which is preferably electroplated.

6. Method for manufacturing a wrapped pipe, in which at least one strip-like material is overlapped and formed into waves, and in which, in addition, at least one helically extending wave crest is provided with recesses (12) and/or fluting,
**characterised in that** at least one strip consists of the material 1.4521.

7. Method according to claim 6,
**characterised in that** the recesses (12) and/or fluting are formed so as to be spaced apart by 10° to 20°, in particular by approximately 15°.

8. Method according to either claim 6 or claim 7,
**characterised in that** the recesses (12) and/or fluting have a depth of up to 1.3 mm and/or of approximately 6 % of the outer diameter of the pipe.

9. Method according to any of claims 6 to 8,
**characterised in that** the pipe (10) is coated with an inorganic thin film.

10. Method according to any of claims 6 to 9,
**characterised in that** the pipe (10) is provided with nickel plating, preferably by electroplating.

## Revendications

1. Tuyau flexible (10) en au moins un matériau en forme de bande enroulé en forme d'hélice, avec recouvrement et largement façonné en forme ondulée lorsque l'on considère une coupe qui contient l'axe du tuyau, dans lequel le matériau en bande s'étend axialement en continu dans ladite coupe et présente à des endroits discrets, sur au moins une crête d'onde s'étendant en forme d'hélice, des creux (12) et/ou une cannelure, **caractérisé en ce qu'**au moins une bande est constituée du matériau 1.4521.

2. Tuyau flexible selon la revendication 1, **caractérisé en ce que** les creux (12) et/ou la cannelure sont formés avec des écartements de 10° à 20°, en particulier d'environ 15°.

3. Tuyau flexible selon la revendication 1 ou 2, **caractérisé en ce que** les creux (12) et/ou la cannelure présentent une profondeur allant jusqu'à 1,3 mm et/ou environ 6 % du diamètre extérieur du tuyau.

4. Tuyau flexible selon l'une quelconque des revendications précédentes, **caractérisé en ce que** celui-ci présente un revêtement en couche mince inorganique.

5. Tuyau flexible selon l'une quelconque des revendications précédentes, **caractérisé en ce que** celui-ci présente un recouvrement de nickel, qui est déposé de préférence par voie galvanique.

6. Procédé de fabrication d'un tuyau enroulé, dans lequel on pose avec recouvrement un matériau en forme de bande et on le met sous forme ondulée, et dans lequel en outre au moins une crête d'onde s'étendant en forme d'hélice est munie de creux (12) et/ou d'une cannelure, **caractérisé en ce qu'**au moins une bande est constituée du matériau 1.4521.

7. Procédé selon la revendication 6, **caractérisé en ce que** l'on forme les creux (12) et/ou la cannelure avec des écartements de 10° à 20°, en particulier d'environ 15°.

8. Procédé selon la revendication 6 ou 7, **caractérisé en ce que** l'on forme les creux (12) et/ou la cannelure avec une profondeur allant jusqu'à 1,3 mm et/ou environ 6 % du diamètre extérieur du tuyau.

9. Procédé selon l'une quelconque des revendications 6 à 8, **caractérisé en ce que** l'on revêt le tuyau (10) d'une couche mince inorganique.

10. Procédé selon l'une quelconque des revendications 6 à 9, **caractérisé en ce que** l'on munit le tuyau (10) d'un recouvrement de nickel, de préférence par un dépôt galvanique.
